Europäisches Patentamt

European Patent Office

Office européen des brevets

(19)

(11) Veröffentlichungsnummer: **0 143 452**
**A2**

(12) **EUROPÄISCHE PATENTANMELDUNG**

(21) Anmeldenummer: **84114217.7**

(22) Anmeldetag: **24.11.84**

(51) Int. Cl.⁴: **B 65 H 35/02, B 65 H 18/10**

(30) Priorität: **28.11.83 US 555767**
**28.11.83 US 555780**

(43) Veröffentlichungstag der Anmeldung: **05.06.85**
**Patentblatt 85/23**

(84) Benannte Vertragsstaaten: **AT CH DE FR GB LI**

(71) Anmelder: **DEERE & COMPANY, 1 John Deere Road,**
**Moline Illinois 61265 (US)**

(72) Erfinder: **Boardman, Peter William, 538 Vine Street, St.**
**Catharines Ontario L2M 3T8 (CA)**

(74) Vertreter: **Sartorius, Peter et al, DEERE & COMPANY**
**European Office, Patent Department**
**Postfach 503 Steubenstrasse 36-42,**
**D-6800 Mannheim 1 (DE)**

(54) **Vorrichtung zum Schneiden und Aufwickeln von Metallstreifen bzw. eines Metallbandes.**

(57) Die Vorrichtung zum Schneiden und Aufwickeln von Metallbändern (20) weist ein Schneidorgan mit einer nachgeschalteten Führungsvorrichtung auf, die aus übereinander angeordneten, konvergierend verlaufenden Führungsteilen mit einer Andruckrolle (28) besteht. Das Metallband (20) wird über die Führungsvorrichtung einer eine Schlitzöffnung (104) aufweisenden Rolle (74) zugeleitet, die das Metallband (20) aufwickelt. Nach dem Aufwickelvorgang wird das aufgewickelte Metallband (20) von der Rolle (74) abgestreift, die hierzu von der Führungsvorrichtung weggeschwenkt wird, um Beschädigungen an Teilen der Vorrichtung zu vermeiden.

## Vorrichtung zum Schneiden und Aufwickeln von Metallstreifen bzw. eines Metallbandes

Die Erfindung bezieht sich auf eine Vorrichtung zum Schneiden und Aufwickeln von Metallstreifen bzw. eines Metallbandes mit einer Fördervorrichtung und einer in einem Rahmen angeordneten Schneidvorrichtung, einer nachgeschalteten, aus mindestens einer Rolle gebildeten Führungsvorrichtung und einer über einen Motor antreibbaren, in einem Rahmen drehbar gelagerten Rolle zum Aufwickeln des Metallbandes.

Es ist eine Vorrichtung zum Abwickeln und Schneiden von Metallstreifen bekannt (US-A-4 285 475), die aus einer ersten Rolle zur Aufnahme des Metallbandes besteht, von der das zu schneidende Metallband abgewickelt werden soll. Das Metallband wird hierzu einer Führungselemente aufweisenden Schneidvorrichtung zugeführt. Die zugehörigen Messer sind lediglich derart angeordnet, daß das relativ breite Metallband in längliche Streifen aufgeteilt werden kann. Die einzelnen Metallstreifen werden dann nach Passieren der Schneidvorrichtung einem Aufwickelorgan zugeführt.

Demgegenüber liegt der Erfindung die Aufgabe zugrunde, die Vorrichtung derart auszubilden und anzuordnen, daß auf relativ einfache Weise ein Metallband von der Vorrichtung erfaßt, geschnitten, von einer zugehörigen Rolle aufgewickelt und anschließend nach dem Aufwickelvorgang wieder abgestoßen werden kann. Diese Aufgabe ist dadurch gelöst worden, daß die Fördervorrichtung das Metallband in etwa längs zur Scherleiste der Schneidvorrichtung und in Richtung der Rolle bewegt, die zur Aufnahme des Metallbandes in der Nähe des Rahmens gelagert ist und Stellelemente aufweist, die eine Axialverstellung des Metallbandes gegenüber der Rolle sowie ein Abstreifen von der Rolle herbeiführen. Nach Zuführen des Metallbandes in die Schneidvorrichtung läßt sich dieses abschneiden, in Längsrichtung der Schneidvorrichtung verschieben und ohne weiteres von der nachgeordneten Rolle aufwickeln und von dem übrigen Metallband abtrennen, so daß anschließend das aufgewickelte Metallband ohne weiteres von der Rolle wieder abgestoßen werden kann. Ein derartiger Arbeitsprozeß ist sehr zeitsparend, da ohne zusätzlichen Arbeitsvorgang sich das an sich sperrige Metallband auf einfache Weise in eine kompakte, leicht transportierbare Form bringen läßt. Hierzu ist es vorteilhaft, daß zur Aufnahme und Weiterleitung des Anfanges des Metallteiles bzw. Metallbandes im Bereich der Einzugszone bzw. der Schneidvorrichtung Führungselemente vorgesehen sind. Durch die Verwendung von Führungselementen, die hinter der Schneidvorrichtung vorgesehen sind, wird ein einfacher und gleichmäßiger Transport des Metallbandes zur Rolle gewährleistet.

In weiterer Ausgestaltung der Erfindung ist es vorteilhaft, daß die Stellelemente als Abstreifvorrichtung ausgebildet sind, zu der ein mit der Rolle zur Aufnahme des Metallbandes verbundener Hydraulikzylinder bzw. Abstreifzylinder gehört, der einenends mit dem Rahmen der Fördervorrichtung, anderenends mit der Rolle verbunden ist, wobei für den Abstreifvorgang das Metallband gegen ein Widerlager zur Anlage bringbar ist, das im Bereich der Rolle angeordnet ist. Die über einen Hydraulikzylinder verstellbaren Stellelemente gestatten auf einfache Weise ein Abstreifen der Rolle, wozu das Metallband beim Abstreifvorgang von der Rolle gegen ein Widerlager gedrückt werden kann, so daß die Rolle bzw. die als Dorn ausgebildete Rolle ohne weiteres aus dem aufgewickelten Metallband herausgezogen werden kann. Vorteilhaft ist es ferner, daß die Rolle in dem vertikal verschwenkbaren Rahmen drehbar gelagert ist, dessen Schwenkachse mit Abstand zur Drehachse der Rolle angeordnet ist. Da die Rolle mit einem Teil des Rahmens verschwenkbar ist, läßt sich diese ohne weiteres dann von der Schneidvorrichtung fortschwenken, um ein Abstoßen des Metallbandes von der Rolle zu gewährleisten, ohne daß Beschädigungen an den Rahmenteilen bzw. an der Schneidvorrichtung auftreten können.

0143452

Vorteilhaft ist es hierzu außerdem, daß in Förderrichtung gesehen hinter der Schneidvorrichtung eine verstellbare Greifvorrichtung angeordnet ist, die in eine Richtung parallel zur Scherleiste der Schneidvorrichtung verstellbar ist und das Metallband in Richtung der Führungsvorrichtung bewegt. Die Greifvorrichtung gewährleistet die einwandfreie Erfassung des Metallbandes und zieht es durch die Schneidvorrichtung, bis es an die Rolle herangeführt wird, die zur Aufnahme des Metallbandes dient. Je nach den einzelnen Anforderungen kann die Führungsvorrichtung aus mindestens einer Rolle bestehen, die als Andruckrolle ausgebildet sein kann und hierzu über einen Motor antreibbar ist. Ferner ist es hierzu vorteilhaft, daß die Rolle zur Aufnahme des Metallbandes einen Antriebsmotor aufweist, der am Rahmen zur Aufnahme der Rolle gelagert ist, wobei zwischen der Rolle und dem Antriebsmotor Antriebselemente vorgesehen sind, die gemeinsam mit dem Antriebsmotor und der Rolle über den Rahmen verschwenkbar sind. Vorteilhaft ist es außerdem, daß die Rolle in einer im Rahmen vorgesehenen Buchse axial verschiebbar aufgenommen und einenends an einen Hydromotor bzw. Abstreifmotor angeschlossen ist. Die Verwendung eines Antriebsmotors für die Rolle gestattet auf einfache Weise ein Aufwickeln des Metallbandes. Hierzu können die Teile zum Antrieb der Rolle sowie die Rolle selbst verschwenkt werden, wenn das aufgewickelte Metallband nach beendigter Arbeit von der Rolle abgezogen bzw. heruntergedrückt werden soll. Eine einwandfreie Lagerung erhält man dadurch, daß die Rolle in der Buchse verschiebbar aufgenommen ist.

Damit eine einwandfreie Aufnahme des Metallbandes oder des vorderen Teiles des Metallbandes in der Rolle gewährleistet ist, weist die Rolle ein freies Ende mit einer Schlitzöffnung zur Aufnahme des Anfangteiles des Metallbandes auf. Ein gut funktionierender Antrieb der Rolle und eine gleichzeitige Axialverschiebung der Rolle wird dadurch gewährleistet, daß die zwischen Antriebsmotor und Rolle bzw. Buchse vorgesehenen Antriebselemente Zahnräder sind, wobei die Rolle über einen Keil mit der Buchse drehfest, jedoch gegenüber dieser axial verschiebbar verbunden ist.

In weiterer Ausgestaltung der Erfindung ist es vorteilhaft, daß die Greifvorrichtung unterhalb der Scherleiste der Schneidvorrichtung eine Tragvorrichtung mit einem Magnetkopf aufweist, die an einen höhenverstellbaren Hydraulikzylinder angeschlossen ist, und daß die höhenverstellbare Tragvorrichtung mit dem Magnetkopf an eine horizontale Gleitschiene angeschlossen ist, die in einem Tragrohr verschiebbar aufgenommen ist, wobei ein Hydraulikzylinder einenends an das Tragrohr, anderenends an die Tragvorrichtung angeschlossen ist und ein zweiter Hydraulikzylinder zur Höhenverstellung der Tragvorrichtung einenends an das Tragrohr, anderenends an den Rahmen der Fördervorrichtung angeschlossen ist. Ferner ist es vorteilhaft, daß die Einzugszone aus der Andruckrolle und einem darüber vorgesehenen Führungsteil gebildet ist, wobei die Einzugszone sich in Richtung der Aufgabeseite erweitert. Die Verwendung eines Magnetkopfes gestattet ein einwandfreies Heranführen des Metallbandes an die Führungselemente, gleich wo sie angeordnet sind, ohne daß hierzu zusätzliche Greifelemente erforderlich werden. Ferner wird durch diese Anordnung sichergestellt, daß die abgeschnittenen Metallteile nicht auf die Oberfläche der Fördervorrichtung fallen und diese beschädigen. Außerdem kann das Metallband so dirigiert werden, daß es genau in die richtige Lage, beispielsweise zur Rolle, gebracht wird, um von dieser erfaßt und aufgewickelt zu werden.

Im folgenden wird die Erfindung anhand von lediglich einen Ausführungsweg darstellenden Zeichnungen näher erläutert. Es zeigt:

0143452

Fig. 1  eine Wickel- und Schneidvorrichtung,

Fig. 2  eine vergrößerte Darstellung der Wickel-
und Schneidvorrichtung gemäß Fig. 1 mit
der zugehörigen Wickelrolle,

Fig. 3  einen Schnitt entlang der Linie 3 - 3
gemäß Fig. 2,

Fig. 4  eine Teilansicht der Antriebsvorrichtung
für die Wickelrolle,

Fig. 5  eine Draufsicht der Förder- und Wickelelemente,

Fig. 6  eine Seitenansicht der Wickelrolle gemäß

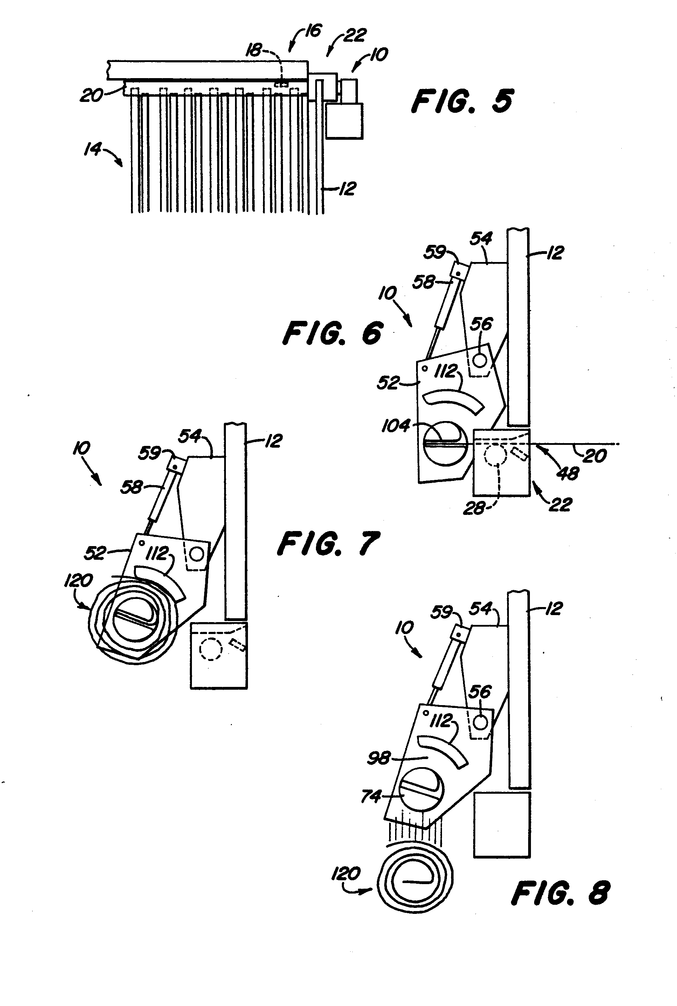

Fig. 5 mit einem aufzuwickelnden Teil, der
in den Schlitz der Wickelrolle eingeführt
ist,

Fig. 7  eine ähnliche Ansicht wie in Fig. 6, wobei der aufzuwickelnde Teil sich auf der
Wickelrolle befindet,

Fig. 8  eine ähnliche Ansicht wie in Fig. 7, wobei der aufzuwickelnde Teil von der Wikkelrolle abgestoßen und nach unten abgegeben ist,

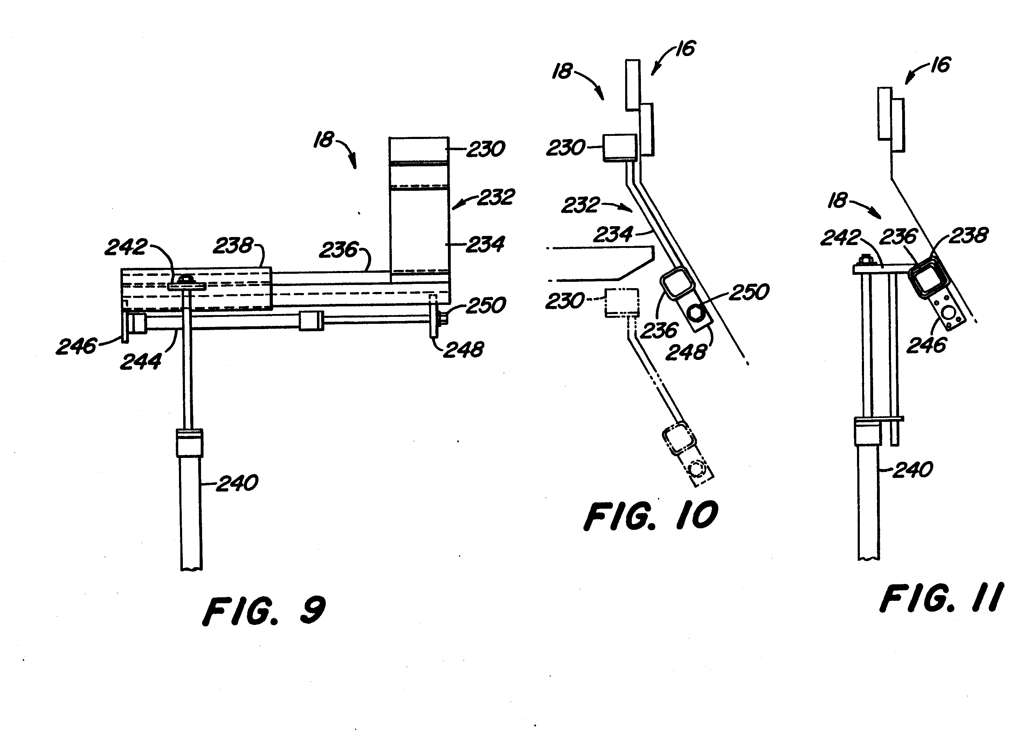

Fig. 9  die Vorderansicht der Greifvorrichtung,

Fig. 10, 11  eine erste und zweite Stellung der
Greifvorrichtung.

In der Zeichnung ist mit 10 eine Wickelvorrichtung bezeichnet, die an einen Rahmen 12 einer Schneidvorrichtung 16 für Metall angeschlossen ist. Eine Fördervorrichtung 14 bewegt abgeschnittenes Material von der Schneidvorrichtung 16 zur Seite und parallel zur Scherleiste der Schneidvorrichtung 16. Die Wickelvorrichtung 10 befindet sich dicht hinter der Scherleiste der Schneidvorrichtung 16, wobei der Frontteil der Wickelvorrichtung 10 in etwa auf der gleichen Ebene wie eine Scherleiste liegt. Eine Greif- und Fördervorrichtung 18 ist dicht hinter der Rückseite der Scherleiste angeordnet und in etwa parallel zur Scherleiste verstellbar. Wenn ein Streifen eines aufzuwickelnden Metalls, wie es mit 20 in Fig. 5 angedeutet ist, mittels der Schneidvorrichtung 16 abgetrennt ist, so wird die Greif- und Fördervorrichtung 18, die einen Magnetkopf 230 (Fig. 9 bis 11) aufweist, entsprechend aktiviert und ergreift somit die Unterseite des Metallteiles 20, um zu verhindern, daß er auf die Austragfördervorrichtung 14 herunterfällt. Die Greifvorrichtung 18 bewegt dann den Metallteil 20 mit Bezug auf Fig. 5 nach rechts, und zwar in eine Einzugsvorrichtung 22, die dicht neben der Schneidvorrichtung 16 vorgesehen ist. Die Einzugsvorrichtung 22 ergreift den zur Seite geführten Metallteil 20 und fördert ihn weiter in Richtung der Wickelvorrichtung 10, wo er zu einer kompakten Rolle aufgewickelt wird.

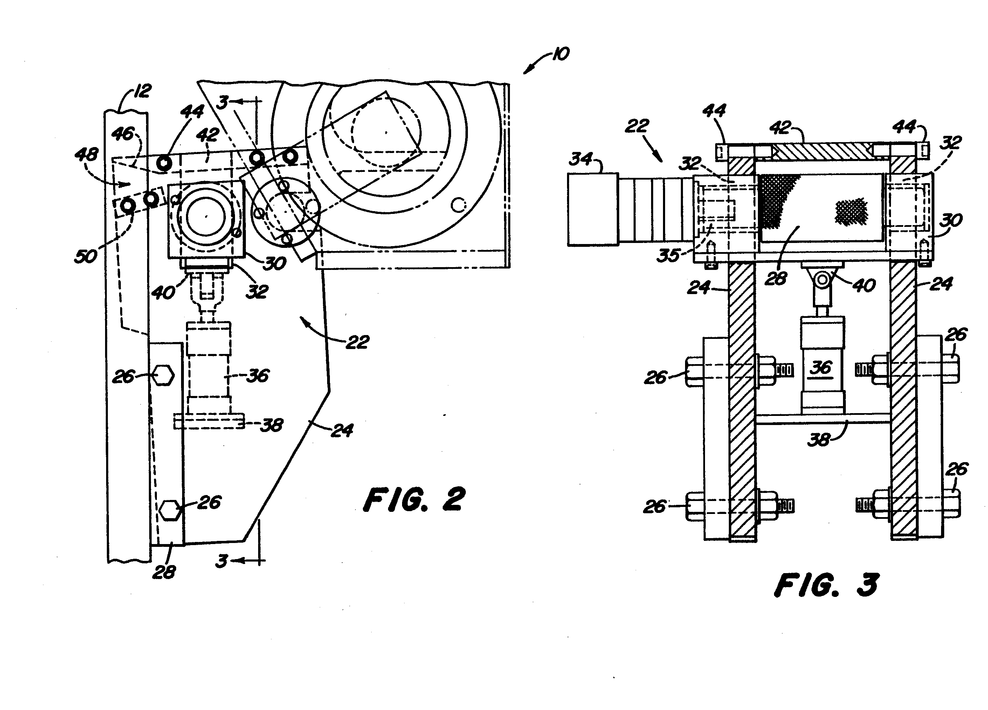

Wie aus den Figuren 2 und 3 hervorgeht, weist die Einzugsvorrichtung 22 mit Abstand zueinander angeordnete Seitenteile 24 auf, die an den Rahmen 12 angeschlossen sind. Die Seitenteile 24 sind hierzu über Schraubenbolzen 26 an Halterungen 27 angeschlossen, die mit dem Rahmen 12 fest verbunden sind. Eine Rolle 28 ist mit einer kleine Erhebungen aufweisenden bzw. einer aufgerauhten Oberfläche versehen, die in einer Tragvorrichtung 30 drehbar aufgenommen ist. Die Tragvorrichtung 30 ist in vertikal verlaufenden Schlitzen 32, die im oberen Bereich der Seitenteile 24 vorgesehen sind, verschiebbar aufgenommen. Die Tragvorrichtung 30 ist mit einem Hydromotor 34 ausgerüstet, der mit der Rolle 28, beispielsweise durch einen Reibantrieb, antriebsverbunden ist. Ein Hydraulikzylinder 36 ist einenends an eine horizontal verlaufende Platte 38 und anderenends an eine Halterung 40 angeschlossen. Die Platte 38 ist endseitig mit den Seitenteilen 24 verbunden, während die Halterung 40 an den Boden der Tragvorrichtung 30 angeschlossen ist. Ein oberer Führungsteil 42 ist zwischen den Seitenteilen 24 angeordnet und mittels Schraubenbolzen 44 gesichert. Der Teil des Führungsteiles 42, der im Bereich der Schneidvorrichtung angeordnet ist, weist einen keilförmigen bzw. sich nach oben verjüngenden Teil 46 auf und bildet mit einem darunter angeordneten Führungsteil 50 eine Einzugszone 48. Die Einzugszone 48 läuft nach hinten zusammen (mit Bezug auf Fig. 2) und weist im Bereich von Einzugsorganen bzw. der Rolle 28 den kleinsten Durchlaßquerschnitt auf, wobei der Durchlaßquerschnitt auf der gleichen Ebene wie die Oberkante der Rolle 28 liegt, wenn die Tragvorrichtung sich in ihrer untersten Stellung befindet. Die Greif- und Fördervorrichtung 18 wird entlang der Rückseite der Scherleiste der Schneidvorrichtung 16 so bewegt, daß der Metallteil 20 in die Einzugszone 48 ohne weiteres eingeführt werden kann. Der Hydraulikzylinder 36 wird dann entsprechend mit Druckmittel beaufschlagt und die zugehörige Kolbenstange ausgefahren, um die Oberfläche der Rolle 28 in einen Kontakt mit dem Boden des Metallstückes zu bringen. Die Greif- und Fördervorrichtung wird dann nicht mehr beaufschlagt, und der Hydromotor 34 wird dann mit Druckmittel beaufschlagt, um das abgetrennte Metallstück 20 der Wickelvorrichtung 10 zuzuführen. Die Wickelvorrichtung 10 weist einen Rahmen 52 auf, der an einer Halterung 54 mittels eines Gelenkes 56 angeschlossen ist und somit in vertikaler Ebene in Richtung und entgegengesetzt zum Führungsteil 42 verschwenkt werden kann. Das Gelenk 56 verläuft im wesentlichen quer zur Achse der Scherleiste der Schneidvorrichtung 16. Ein Hydraulikzylinder 58 ist mit seinem zylinderseitigen Ende gelenkig an eine Halterung 59 angeschlossen, die wiederum an der Halterung 54 befestigt ist. Das Kolbenstangenende des Hydraulikzylinders 58 ist gelenkig an den
oberen Teil des Rahmens 52 außerhalb des Gelenkes 56 angeschlossen. Durch Einfahren der Kolbenstange des Hydraulikzylinders 58 wird die Wickelvorrichtung 10 von der Einzugsvorrichtung 22 wegbewegt, um einen Abstand zwischen der
Wickelvorrichtung und der Antriebsvorrichtung zu bilden.

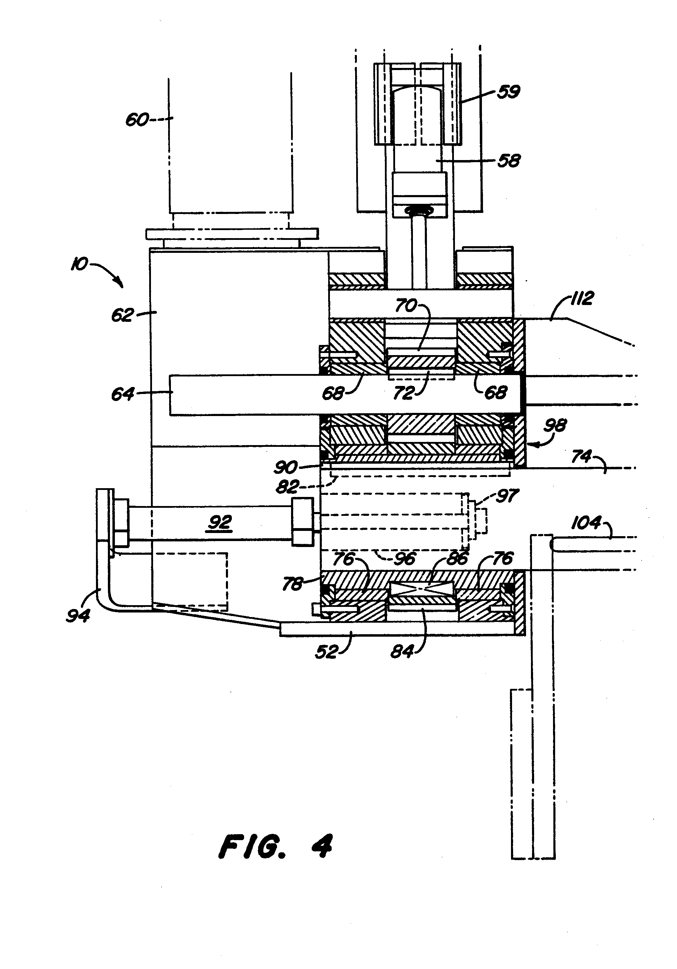

Der Rahmen 52 weist einen Antriebsmotor 60 auf, der mit
einem Getriebegehäuse 62 ausgestattet ist, dessen Antriebselemente mit einer Welle 64 antriebsverbunden sind. Die
Welle 64 weist hierzu ein Antriebsrad bzw. ein Stirnrad 70
auf, das mittels eines Keiles 72 mit der Welle 64 drehfest
verbunden ist. Die Rolle 74 ist im Rahmen 52 um eine Achse
drehbar angeordnet, die parallel zur Achse der Welle 64
verläuft. Die Rolle 74 ist hierzu in einem Lager 76 drehbar aufgenommen. Die Rolle 74 ist ferner in einer Buchse
78 verschiebbar aufgenommen und mittels eines Keiles 72
mit der Buchse 78 drehfest verbunden. Auf der Buchse 78
ist ein Stirnrad 84 angeordnet und mittels eines Keiles 86
mit der Buchse 78 drehfest verbunden. Das Stirnrad 84 kämmt
mit dem Stirnrad 70, um die Rolle 74 entsprechend anzutreiben. Die Buchse 78 ist mit einem Längsschlitz 90 ausgestattet, um die Rolle 74 und den Keil 82 mit Bezug auf Fig. 4
nach links verschieben zu können.

Ein Abstreifzylinder 92 ist mit seinem zylinderseitigen
Ende an eine Halterung 94 angeschlossen, die mit dem Rahmen 52 verbunden ist. Der Zylinder 92 verläuft koaxial zur
Rolle 74, wobei das kolbenstangenseitige Ende des Abstreifzylinders 92 sich in eine Aussparung 96 der Rolle 74 erstreckt und über ein Arretierungselement 97 an der Rolle 74
gesichert ist. Der Durchmesser der Aussparung 96 ist so
groß, daß durch Einfahren der Kolbenstange das zylinderseitige Ende des Abstreifzylinders 92 innerhalb der Aussparung 96 aufgenommen werden kann. Der Hub der Kolbenstange des Abstreifzylinders 92 ist so gewählt, daß bei vollständig eingefahrener Kolbenstange das äußerste Ende der Rolle 74 in etwa auf der gleichen Ebene liegt wie die äußere Fläche 98 des Rahmens 52 im Bereich der Rolle 74. Die äußere Fläche 98 des Rahmens dient als Anlagefläche für das aufgewickelte Material, wenn die Rolle 74 mittels des Abstreifzylinders 92 eingefahren wird.

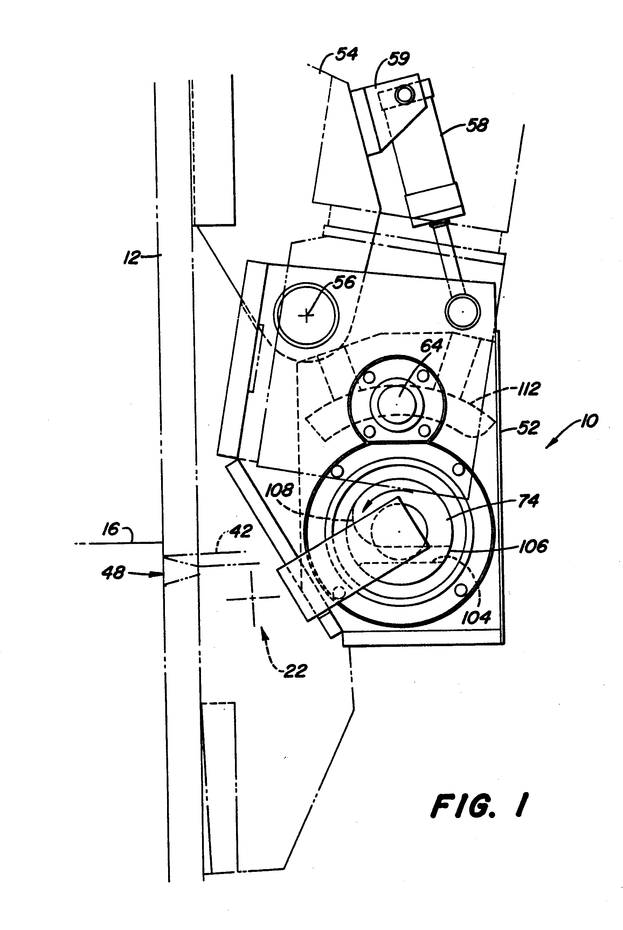

Die Rolle 74 weist eine Schlitzöffnung 104 auf, die sich axial von der Fläche 98 bis zum äußeren Ende der Rolle erstreckt, wenn sich die Rolle 74 in ihrer ausgefahrenen Stellung befindet. Die Schlitzöffnung 104 erstreckt sich mit Bezug auf Fig. 1 in der Rolle 74 radial nach außen, wobei das geschlossene Ende der Schlitzöffnung 104 bei 108 im Bereich des Außenumfanges der Rolle 74 vorgesehen ist. Die Einlaßöffnung der Schlitzöffnung 104 liegt in etwa auf der gleichen Ebene wie die Einzugszone 48 der Einzugsvorrichtung 22. Die Schlitzöffnung 104 erweitert sich an der Stelle 108 und ermöglicht dadurch eine einfache Aufnahme des Anfangteiles des Metallteiles. Durch Drehen der Rolle 74 gemäß Pfeilrichtung wird die Metallrolle 120 einwandfrei kompakt aufgerollt. Ein gebogener Führungsteil 112 erstreckt sich außerhalb und oberhalb der Rolle 74, um das Ende der Rolle entsprechend mitzugestalten bzw. zu formen, wenn beispielsweise das Ende des Metallbandes auf die Rolle 74 aufgewickelt worden ist.

In den Figuren 9, 10 und 11 sind die Abstreifvorrichtung und die Greif- und Fördervorrichtung dargestellt. Die Greif- und Fördervorrichtung 18 ist zwischen einer eingefahrenen Stellung gemäß den gestrichelten Linien in Fig. 10 und einer angehobenen Stellung gemäß den ausgezogenen Linien in Fig. 10 verstellbar, wobei sie unmittelbar hinter der Scherleiste der Schneidvorrichtung 16 liegt. Der Magnetkopf 230 ist an einer Tragvorrichtung 232 angeordnet, die als abgewinkelte Tragplatte 234 ausgebildet ist. Wie aus Fig. 10 hervorgeht, paßt sich die Tragplatte 234 bei angehobenem Magnetkopf 230 in seiner Arbeitsstellung entsprechend der Form der Rückseite der Scherleiste der Schneidvorrichtung 16 an. Dabei liegt der Magnetkopf 230 direkt unterhalb der Scherleiste der Schneidvorrichtung 16. Die abgewinkelte Tragplatte 234 ist an die obere Kante einer Gleitschiene 236 angeschweißt. Die Gleitschiene 236 weist einen rechteckförmigen Querschnitt auf und ist in einem einen entsprechenden Querschnitt aufweisenden Tragrohr 238 verschiebbar aufgenommen. Das Tragrohr 238 ist, um entsprechend vertikal verstellt zu werden, dicht hinter der Rückseite der Scherleiste der Schneidvorrichtung 16 vorgesehen. Hierzu sind ein bzw. zwei Hydraulikzylinder 240 mit Abstand zueinander angeordnet und mit ihren kolbenstangenseitigen Enden an das Tragrohr 238 angeschlossen. Ein jeder Hydraulikzylinder 240 ist mittels einer Halterung 242 mit dem Tragrohr 238 verbunden. Die Halterung 242 kann an die Ecke des Tragrohres 238 angeschweißt werden. Die Tragvorrichtung 232 läßt sich quer und parallel zur Scherleiste verstellen, und zwar in bzw. aus der in Fig. 10 dargestellten Ebene. Hierzu ist ein Hydraulikzylinder 244 (siehe Fig. 9) einenends an das Tragrohr 238 mittels einer Halterung 246 angeschlossen. Das kolbenstangenseitige Ende des Hydraulikzylinders 244 ist an eine Halterung 248 angeschlossen, die beispielsweise an das Ende der Gleitschiene 236 angeschweißt sein kann. Das kolbenstangenseitige Ende des Hydraulikzylinders 244 weist einen Gewindeteil auf, der mittels einer Mutter 250 mit der Halterung 248 verbunden ist. Bevor ein Metallteil 20 von dem Metallband mittels der Schneidvorrichtung 16 abgetrennt wird, wird der Hydraulikzylinder 240 ausgefahren, um den Magnetkopf 230 anzuheben und dicht in den Bereich der Schneidkante der Schneidvorrichtung 16 gemäß Fig. 10 zu bringen (siehe ausgezogene Linien). Der Magnetkopf 230 ergreift das Metallband 20, nachdem es von dem übrigen Metallband abgetrennt worden ist. Hat der Magnetkopf 230 das Metallband 20 erfaßt, so wird der Hydraulikzylinder 244 mit Druckmittel beaufschlagt, um die Gleitschiene 236 in dem zugehörigen Tragrohr 238 zu verschieben und somit den Metallstreifen von der Scherleiste der Schneidvorrichtung 16 wegzubewegen. Die Greif- und Fördervorrichtung 18 verhindert, daß der Metallstreifen auf die Förderoberfläche fällt, und ermöglicht, daß das erfaßte Metallband 20 zur Seite des Rahmens der Greif- und Fördervorrichtung 18 bewegt wird. An dieser Stelle wird das Metallband 20 zu einer Metallrolle 120 aufgewickelt und, wie bereits beschrieben, in einen entsprechenden in der Zeichnung nicht dargestellten Sammelbehälter abgestoßen.

Im Arbeitseinsatz wird die Schneidvorrichtung 16 mit dem zugehörigen Metallband bzw. Metallteil 20 von dem übrigen Metallband abgetrennt (siehe Fig. 5). Die Greif- und Fördervorrichtung 18 wird danach unmittelbar eingeschaltet, um den abgetrennten Metallteil 20 zu erfassen, bevor er von der Austragfördervorrichtung 14 erfaßt wird. Die Greif- und Fördervorrichtung 18 bewegt dann den Metallteil 20 im wesentlichen parallel zur Scherleiste der Schneidvorrichtung 16 in die Einzugszone 48 der Einzugsvorrichtung 22. Danach wird der Hydraulikzylinder 36 mit Druckmittel beaufschlagt und die Kolbenstange ausgefahren, so daß die eine geriffelte Oberfläche aufweisende Rolle 28 mit der Oberfläche des Metallteiles 20 Kontakt bekommt, und zwar zu einem Zeitpunkt, in dem die Greif- und Fördervorrichtung 18 abgeschaltet wird und der Hydromotor 34 mit Druckmittel beaufschlagt wird. Der Hydromotor 34 fördert den Metallteil 20 schnell in die Schlitzöffnung 104 der Rolle 74. Das Ende des Metallteiles 20 legt sich dabei gegen das geschlossene Ende 106 der Schlitzöffnung 104 an. Anschließend wird der Hydromotor 34 gestoppt und dann der Antriebsmotor 60 für die Wickelvorrichtung 10 eingeschaltet, um somit die Rolle 74 zu drehen und den Metallteil 20 auf die Rolle 74 aufzuwickeln. Dreht sich die Rolle 74, so wird der Streifen des Metallteiles 20 mit Bezug auf die Figuren 6 und 7 nach links bewegt, und zwar weg von der Scherleiste der Schneidvorrichtung 16, und dabei gleichmäßig auf die Rolle 74 aufgewickelt, bis das Ende des Metallteiles 20 vollständig durch die Einzugsvorrichtung 22 gezogen ist. Ist der Metallteil bzw. das Metallband 20 vollständig auf die Rolle 74 aufgewickelt, so kann die Kolbenstange des Hydraulikzylinders 58 eingezogen werden, um damit zu verhindern, daß das aufgewickelte Metallband die Antriebsvorrichtung bzw. Rahmenteile davon berührt, da das aufgewickelte Metallband einen relativ großen Durchmesser aufweist. Ist das Ende des Metallbandes bzw. des Metallteiles 20 vollständig durch die Einzugsvorrichtung 22 gezogen worden, so wird der Führungsteil 112 gegen das Ende des Metallbandes gepreßt, so daß eine kompakte Metallrolle geformt wird (siehe Fig. 7 und 8). Ist das Metallband 20 zu einer entsprechenden Metallrolle 120 auf der Rolle 74 geformt, so kann der Antriebsmotor 60 abgestellt werden und der Hydraulikzylinder 92 eingefahren werden, so daß die innere Kante der Metallrolle 120 die Oberfläche 98 berührt. Durch vollständiges Einfahren der entsprechenden Kolbenstange des Hydraulikzylinders 92 wird die Metallrolle 120 von der Rolle 74 abgestreift und fällt in einen in der Zeichnung nicht dargestellten Container. Während des Abstreifvorganges der Metallrolle 120 bleibt der Hydraulikzylinder 92 in seiner eingefahrenen Stellung, so daß die Metallrolle 120 ungehindert in den Container unterhalb der Wickelvorrichtung 10 fallen kann. Der Antriebsmotor 60 wird dann wieder in eine Position gebracht, in der die Schlitzöffnung 104 in etwa horizontal und auf gleicher Ebene zur Einzugszone 48 der Einzugsvorrichtung 22 ausgerichtet wird, um den nächsten Metallstreifen aufzunehmen. Nachdem die Metallrolle 120 von der Wickelvorrichtung 10 entfernt worden ist, kann der Hydraulikzylinder 58 wieder ausgefahren werden, um die Rolle 74 in den Bereich der Einzugsvorrichtung 22 zu verstellen (siehe Fig. 6).

Patentansprüche

1. Vorrichtung zum Schneiden und Aufwickeln von Metallstreifen bzw. eines Metallbandes (20) mit einer Fördervorrichtung (14) und einer in einem Rahmen (12) angeordneten Schneidvorrichtung (16), einer nachgeschalteten, aus mindestens einer Rolle (28) gebildeten Führungsvorrichtung und einer über einen Motor antreibbaren, in einem Rahmen (52) drehbar gelagerten Rolle (74) zum Aufwickeln des Metallbandes, dadurch gekennzeichnet, daß die Fördervorrichtung (14) das Metallband (20) in etwa längs zur Scherleiste der Schneidvorrichtung (16) und in Richtung der Rolle (74) bewegt, die zur Aufnahme des Metallbandes (20) in der Nähe des Rahmens (52) gelagert ist und Stellelemente aufweist, die eine Axialverstellung des Metallbandes (20) gegenüber der Rolle (74) sowie ein Abstreifen von der Rolle (74) herbeiführen.

2. Vorrichtung nach Anspruch 1, dadurch gekennzeichnet, daß zur Aufnahme und Weiterleitung des Anfanges des Metallteiles bzw. Metallbandes (20) im Bereich der Einzugszone (48) bzw. der Schneidvorrichtung (16) Führungselemente vorgesehen sind.

3. Vorrichtung nach Anspruch 1 oder 2, dadurch gekennzeichnet, daß die Stellelemente als Abstreifvorrichtung ausgebildet sind, zu der ein mit der Rolle (74) zur Aufnahme des Metallbandes verbundener Hydraulikzylinder bzw. Abstreifzylinder (92) gehört, der einenends mit dem Rahmen der Fördervorrichtung, anderenends mit der Rolle (74) verbunden ist, wobei für den Abstreifvorgang das Metallband (20) gegen ein Widerlager (Fläche 98) zur Anlage bringbar ist, das im Bereich der Rolle (74) angeordnet ist.

4. Vorrichtung nach einem oder mehreren der vorherigen Ansprüche, dadurch gekennzeichnet, daß die Rolle (74) in dem vertikal verschwenkbaren Rahmen (52) drehbar gelagert ist, dessen Schwenkachse (Gelenk 56) mit Abstand zur Drehachse der Rolle (74) angeordnet ist.

5. Vorrichtung nach einem oder mehreren der vorherigen Ansprüche, dadurch gekennzeichnet, daß in Förderrichtung gesehen hinter der Schneidvorrichtung (16) eine verstellbare Greifvorrichtung (18) angeordnet ist, die in eine Richtung parallel zur Scherleiste der Schneidvorrichtung (16) verstellbar ist und das Metallband (20) in Richtung der Führungsvorrichtung (Rolle 28) bewegt.

6. Vorrichtung nach einem oder mehreren der vorherigen Ansprüche, dadurch gekennzeichnet, daß die Führungsvorrichtung mindestens eine Rolle (28), die als Andruckrolle ausgebildet sein kann und die über einen Motor (Hydromotor 34) antreibbar ist, aufweist.

7. Vorrichtung nach einem oder mehreren der vorherigen Ansprüche, dadurch gekennzeichnet, daß die Rolle (74) zur Aufnahme des Metallbandes (20) einen Antriebsmotor (60) aufweist, der am Rahmen (52) zur Aufnahme der Rolle (74) gelagert ist, wobei zwischen der Rolle (74) und dem Antriebsmotor Antriebselemente vorgesehen sind, die gemeinsam mit dem Antriebsmotor und der Rolle über den Rahmen (52) verschwenkbar sind.

8. Vorrichtung nach einem oder mehreren der vorherigen Ansprüche, dadurch gekennzeichnet, daß die Rolle (74) in einer im Rahmen (52) vorgesehenen Buchse (78) axial verschiebbar aufgenommen und einenends an einen Hydromotor bzw. Abstreifmotor (92) angeschlossen ist.

9. Vorrichtung nach einem oder mehreren der vorherigen Ansprüche, dadurch gekennzeichnet, daß die Rolle (74) ein freies Ende mit einer Schlitzöffnung (104) zur Aufnahme des Anfangteiles des Metallbandes (20) aufweist.

10. Vorrichtung nach einem oder mehreren der vorherigen Ansprüche, dadurch gekennzeichnet, daß die zwischen Antriebsmotor (60) und Rolle (74) bzw. Buchse (78) vorgesehenen Antriebselemente Zahnräder (70, 84) sind, wobei die Rolle (74) über einen Keil (82) mit der Buchse (78) drehfest, jedoch gegenüber dieser axial verschiebbar verbunden ist.

11. Vorrichtung nach einem oder mehreren der vorherigen Ansprüche, dadurch gekennzeichnet, daß die Greifvorrichtung (18) unterhalb der Scherleiste der Schneidvorrichtung (16) eine Tragvorrichtung (232) mit einem Magnetkopf (230) aufweist, die an einen höhenverstellbaren Hydraulikzylinder (240) angeschlossen ist.

12. Vorrichtung nach einem oder mehreren der vorherigen Ansprüche, dadurch gekennzeichnet, daß die höhenverstellbare Tragvorrichtung (232) mit dem Magnetkopf (230) an eine horizontale Gleitschiene (236) angeschlossen ist, die in einem Tragrohr (238) verschiebbar aufgenommen ist, wobei ein Hydraulikzylinder (244) einenends an das Tragrohr (238), anderenends an die Tragvorrichtung (232) angeschlossen ist und ein zweiter Hydraulikzylinder (240) zur Höhenverstellung der Tragvorrichtung (232) einenends an das Tragrohr (238), anderenends an den Rahmen der Fördervorrichtung angeschlossen ist.

13. Vorrichtung nach einem oder mehreren der vorherigen Ansprüche, dadurch gekennzeichnet, daß die Einzugszone (48) aus der Andruckrolle (28) und einem darüber vorgesehenen Führungsteil (42) gebildet ist, wobei die Einzugszone sich in Richtung der Aufgabeseite erweitert.

FIG. 1

FIG. 3

FIG. 2

FIG. 4

0143452

FIG. 5

FIG. 6

FIG. 7

FIG. 8

FIG. 9

FIG. 10

FIG. 11